# EUROPEAN PATENT SPECIFICATION

(11) **EP 2 412 658 B1**
(45) Date of publication and mention of the grant of the patent: **06.03.2013**
(21) Application number: 11175575.7
(22) Date of filing: 27.07.2011
(51) Int. Cl.: B66C 1/02, B66C 1/24, B66C 19/00, B65G 49/06

(54) **Apparatus for moving individual or packed plate-like products**
Vorrichtung zum Bewegen individueller oder verpackter plattenähnlicher Produkte
Appareil pour déplacer des produits de type plaque individuellement ou en paquets

(30) Priority: 30.07.2010 IT PD20100244
(43) Date of publication of application: 01.02.2012
(73) Proprietor: Piazza, Marco, 36015 Schio (Prov. of Vicenza) (IT); Piazza, Alessandro, 36015 Schio VI (IT)
(72) Inventor: Piazza, Antonio, 36015 SCHIO VI (IT)
(74) Representative: Modiano, Micaela Nadia

(56) References cited:
- EP-A1- 1 471 017
- EP-A1- 1 695 928
- US-A- 1 959 216

## Description

The present invention relates to an apparatus for moving individual or packed plate-like products, particularly but not exclusively for storage systems with perpendicular translational motion.

A particular application of the invention is with packs of plate-like products, such as big plates of glass and the like, to be accommodated in storage systems particularly but not exclusively of the type with inclined frames and with perpendicular translational motion.

Nowadays apparatuses are known for moving individual or packed plate-like products, the peculiarity of which is that they are constituted by a carriage-mounted and motorized structure that can perform a translational movement on rails in the direction of extension of a storage system with which the apparatus interacts. On the upper part of the structure there is a supporting beam, on which a grip assembly is placed so that it can slide, comprising, integrated in a single flat frame, both means for lifting, transporting and depositing packs of plate-like products, and grip means for transporting and depositing individual plate-like products.

Such an apparatus is, for example, described and claimed in Italian patent no. 1361232 in the name of Alessandro and Marco Piazza. US 1,959,216 A discloses another similar apparatus.

This known apparatus, although used with success, has aspects that can be improved.

A first aspect with room for improvement consists in the fact that the single frame for gripping and transporting individual or packed plate-like products, with which the above-mentioned apparatus is provided, also has horizontal reinforcement bars.

Such a grip frame does not lend itself to transporting low-emission glass panes, which must be gripped by the untreated surface and deposited by resting it on the same surface by which it is gripped, so that the surface that has undergone the low-emission treatment remains on the outside.

In fact, depositing low-emission glass panes must be performed in such a way that the grip frame passes through the structure that forms the resting surface.

A grip frame as described above, with horizontal bars, is not designed to perform such an operation.

Another aspect with room for improvement of the known apparatus consists in the fact that the feet for transporting packs are fixed to the frame. This means it is not possible to adjust the gripping height from the ground of the packs, which can be placed on inclined frames or on A-frames with the lower edge at different heights, and which obviously are not all accessible with feet that cannot perform a vertical translational motion.

This means that often, human intervention is necessary to load the packs on the frame, and this intervention, in addition to posing a constant hazard due to the dimensions and weight of the packs themselves, also constitutes a cost in terms of labor.

Moreover, the grip and transport frame of the above-mentioned known apparatus is not provided with means that move it away from or closer to the floor.

This grip and transport frame therefore can not be lifted to overcome obstacles placed at the rails where the apparatus slides, such an obstacle being for example a work table for plates of glass.

The aim of the present invention is to provide an improved apparatus for moving individual or packed plate-like products, that is capable of overcoming the drawbacks of the transport apparatuses of the known type.

Within this aim, an object of the present invention is to provide an apparatus that can be easily used in the most varied storage system layouts.

Another object of the invention is to provide an improved apparatus that is also capable of transporting individual plates of low-emission glass.

Another object of the invention is to provide an improved apparatus in which the grip and transport frame is more mobile and versatile, in order to be able to grip plates and packs of plates from heights that vary and are mutually different.

Another object of the present invention is to provide an apparatus that is versatile and flexible in use.

Another object of the present invention is to provide an apparatus that makes it possible to automate the operations of loading and unloading the packs of plate-like products, and also the plate-like products themselves, thus eliminating any manual intervention and therefore intervention by staff, in particular for unloading packs of glass plates from means of transport, which currently are manually unloaded by staff in close and hazardous contact with the packs.

Another object of the present invention is, therefore, to provide an apparatus that is safer than the apparatuses of the known type.

Another object of the present invention is to provide an improved apparatus that maintains a load capacity which is not less than that of the known apparatuses.

Another object of the present invention is to provide an improved apparatus for moving individual or packed plate-like products, that can be easily combined with known and operating processing lines for plate-like products.

Another object of the present invention is to provide an improved apparatus for moving individual or packed plate-like products, that can be produced using systems and technologies of the known type.

This aim and these and other objects which will become more apparent hereinafter, are achieved by an improved apparatus for moving individual or packed plate-like products, particularly but not exclusively for storage systems with perpendicular translational motion, characterized in that it is constituted by a carriage-mounted and motorized structure, which can perform a translational motion on rails in the direction of extension of a storage system with which the apparatus interacts, said carriage-mounted structure being adapted to move, with the help of vertical translational means, a supporting beam which juts out from at least one side of the structure, substantially perpendicular to the direction of translational motion of said structure, said supporting beam supporting, so that it is coupled rotatably, a grip frame, which is constituted by a series of vertical bars arranged in a comb-like arrangement, each vertical bar being provided with a plurality of suckers for gripping plate-like products and being provided in a lower region with supporting brackets for a pack of plate-like products, means for lifting and lowering with respect to the corresponding vertical bar being associated with said brackets, said supporting brackets being directed so as to operate on the opposite side of said suckers with respect to the corresponding bar.

Further characteristics and advantages of the invention will become better apparent from the description of a preferred, but not exclusive, embodiment thereof, which is illustrated for the purposes of non-limiting example in the accompanying drawings wherein:
- Figure 1 is a perspective view from above of an improved apparatus according to the invention;
- Figure 2 is a view from behind of the improved apparatus according to the invention;
- Figure 3 is a detail of a bracket for supporting packs;
- Figure 3a is an exploded detail view of Figure 3;
- Figure 4 is a detail of the vertical translational means of the bar;
- Figure 5 is a side view of the upper part of an improved apparatus according to the invention;
- Figure 6 is a perspective view of an improved apparatus according to the invention in a different embodiment thereof.

With reference to the above-mentioned figures, an improved apparatus for moving individual or packed plate-like products, particularly but not exclusively for storage systems with perpendicular translational motion, is generally designated with the reference numeral 10.

The improved apparatus 10 comprises a carriage-mounted and motorized structure 11 that can perform a translational movement on rails 12.

The carriage-mounted structure 11 is adapted to move, with the help of vertical translational means 13 better described hereinbelow, a supporting beam 14 which is substantially perpendicular to the direction of translational motion of the carriage-mounted structure 11.

The supporting beam 14 in turn supports, so that it is coupled rotatably about an axis parallel to the direction of extension of the beam 14, a grip frame 15.

The grip frame 15 is constituted by a series of vertical bars, four in number in the embodiment described herein, designated with the reference numerals 16, 16a, 16b, and 16c, arranged in a comb-like arrangement, each vertical bar being provided with a plurality of suckers 17, which should be understood as being of a known type, for gripping plate-like products.

The grip frame 15 with vertical bars 16, 16a and so on, in a comb-like arrangement, enables the gripping, moving and placing, on an intermediate inclined frame or on a raised work surface, of a plate of low-emission glass, since the gripping and depositing of the glass can occur on the same surface of the low-emission glass plate.

This is made possible by the absence of transverse bars on the frame, and so the frame 15 with its vertical bars in a comb-like arrangement can pass through a corresponding complementarily shaped inclined frame or work table, provided with suitable openings for the passage of the vertical bars 16 and so on with the corresponding suckers 17.

Each bar 16, 16a and so on is provided in a lower region with a respective bracket 18 for supporting a pack of plate-like products. These brackets 18 are associated with means for lifting and lowering with respect to the corresponding vertical bar 16.

The supporting brackets 18 are directed so as to operate on the opposite side of the suckers 17 with respect to the corresponding vertical bar 16.

In similar apparatuses of the known type, suckers and supports for the packs are on the same side of the grip frame. This makes it necessary to equip the known apparatuses with complex means of retraction and advancement for only the suckers, which if they remained in the grip position would prevent the loading of a pack onto the lower supports.

The positioning of suckers 17 on one side of the grip frame 15, and of the supporting brackets 18 for supporting packs on the opposite side makes it possible to simplify the setup of the improved apparatus according to the invention.

The carriage-mounted and motorized structure 11 comprises a carriage 19 provided with two mutually opposite series of wheels 20, 21 for gliding on the rails 12.

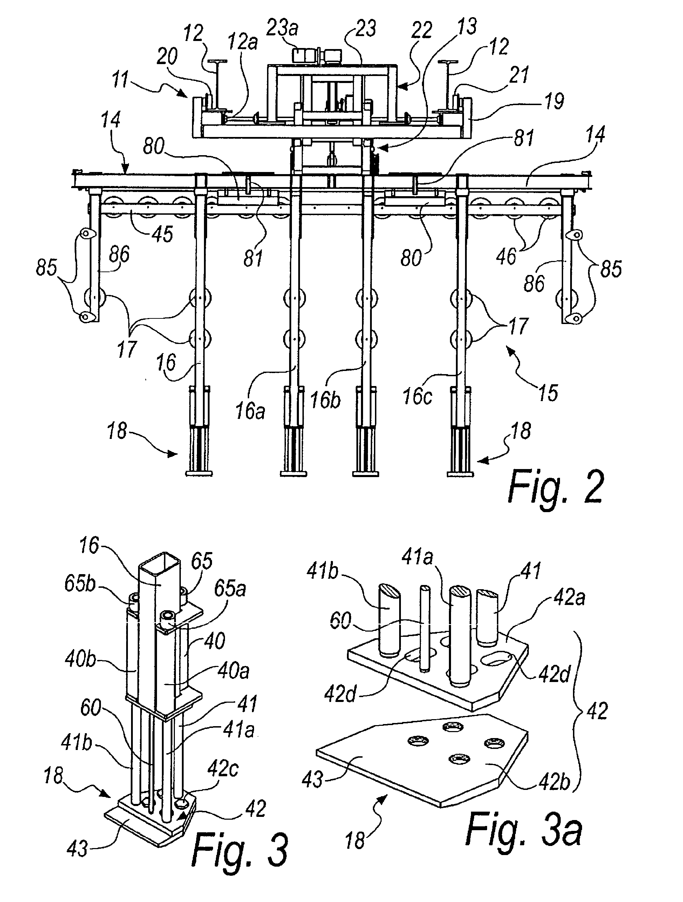

Figure 2 shows the two symmetrical rack and pinion systems 12a which determine the motion of the carriage 19 with respect to the rails 12.

In the embodiment of the invention, described herein for the purposes of non-limiting example of the invention, the rails 12 are raised from the ground, and are part of an overhead crane 50 which is arranged so as to move on second rails 51 fixed to the ceiling or wall of a storage system or other environment.

The lateral carriages 52 that glide on the second rails 51 and support the ends of the first rails 12, are moved with rack and pinion devices 53, and are provided with essential guiding and tipping prevention devices 54, which should be understood as being of a known type.

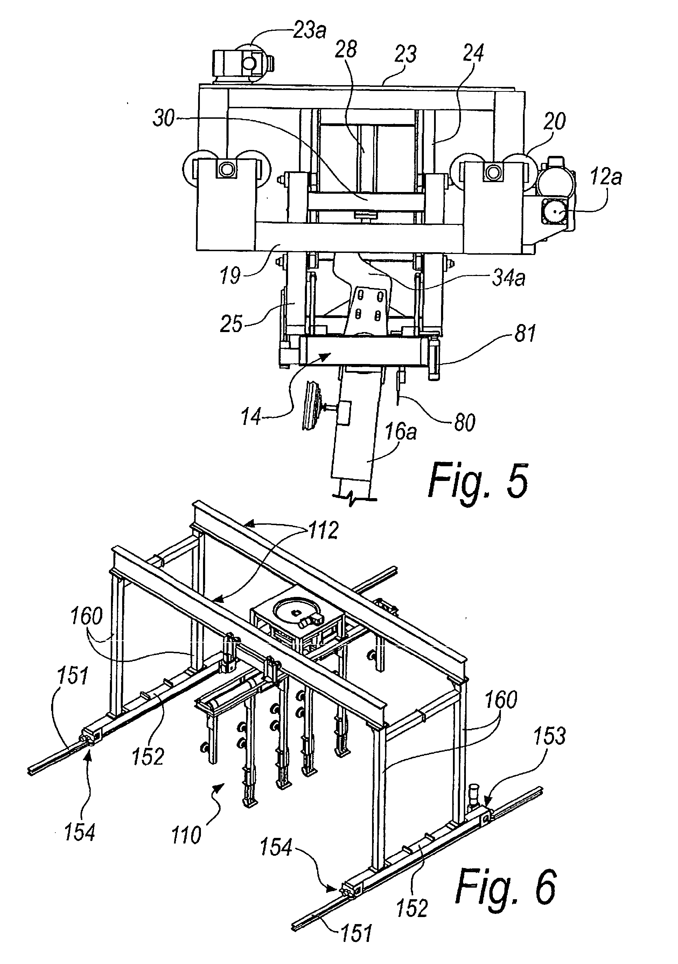

In a different embodiment of the invention, shown in Figure 6 wherein the apparatus is designated with the reference numeral 110, the rails 112 are supported by columns 160, which in turn rest on lateral carriages 152 designed to glide on second rails 151 which, in this case, are on the ground.

In this technical solution too, the lateral carriages 152 are moved with rack and pinion devices 153, and are provided with essential guiding and tipping prevention devices 154, which should be understood as being of a known type.

The carriage 19 centrally supports a turret 22 with a motorized center bearing 23, which has a vertical axis and to which the vertical translation means 13 are fixed.

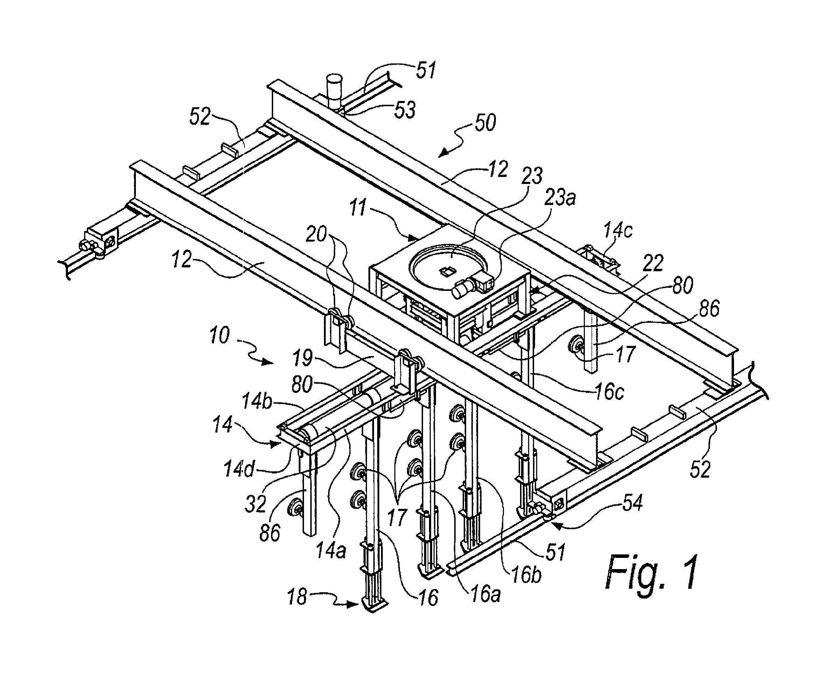

In Figure 1 the motor, and the gear reducer 23a, of the center bearing 23 can be seen.

The motorized center bearing 23 makes it possible to rotate the grip frame 15, thus enabling it to opt to grip a glass plate or to grip a pack in both directions of advancement of the frame 15.

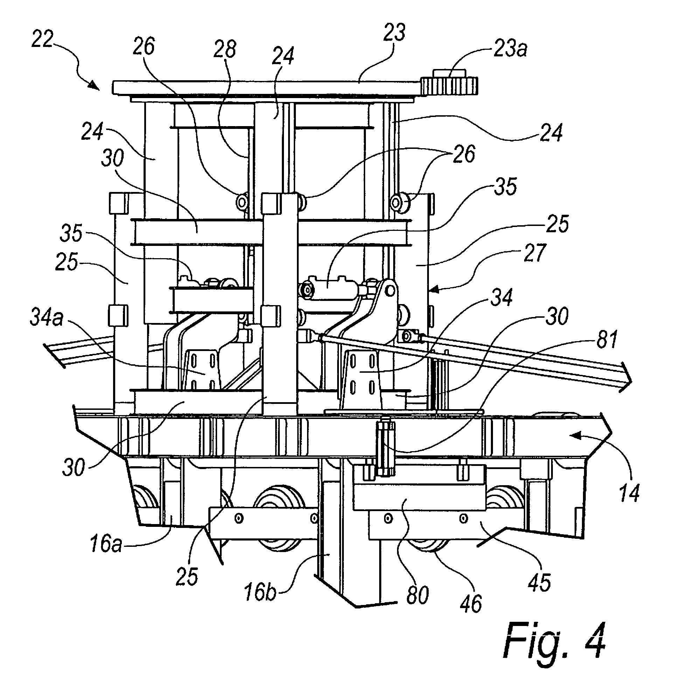

The vertical translational means 13 are provided, in the embodiment described herein, with four vertical guiding profiles 24, which are jointly connected to the rotating part of the center bearing 23. These profiles 24, which are clearly shown in Figure 4, form a guiding frame for a corresponding external cage 27, formed by corresponding posts 25 arranged so as to slide on the vertical profiles 24 by means of wheels 26.

The posts 25 are fixed to the beam 14, and to each other by means of cross-members 30.

The posts 25 and the beam 14 are moved vertically by a fluid-operated actuator 28, for example a double-acting hydraulic piston, interposed between the rotating part of the center bearing 23 and an element of the external cage 27.

It should be understood that this fluid-operated actuator can be substituted by another, equivalent actuator, even if not fluid-operated, that is, an electric actuator or other similar and equivalent device.

The vertical translational means make it possible to vertically move the grip frame 15 so that it can be caused to travel even over, for example, a work table arranged on the trajectory defined by the rails 12, so as to be then repositioned at the correct height for gripping or depositing a glass plate or a pack.

The grip frame 15 is coupled rotatably to the supporting beam 14 by means of a tubular element 32, which is pivoted axially to the beam 14.

In particular, in the embodiment of the invention described herein, the supporting beam 14 is constituted by a quadrilateral of metal profiles 14a, 14b, 14c, and 14d, two forming the length of the beam 14, i.e. the first profiles 14a and 14b, and two opposing profiles forming the width of the beam, i.e. the two second profiles 14c and 14d, as can be seen in Figure 1.

This quadrilateral of profiles forms a space within the beam 14 for accommodating the tubular element 32 that supports the vertical bars 16, 16a and so on.

The tubular element 32 is rotated by means of two symmetrical levers 34, so as to assume the desired and preset inclined configuration for gripping or unloading. Each one of the levers 34, which can be seen in Figures 4 and 5, is fixed at one end to the tubular element 32 and at the opposite end to the stem of an actuator 35, which operates with a substantially horizontal axis and the jacket of which is coupled to a nearby post 25 which is jointly connected to the beam 14.

The action of the actuators 35 defines the inclination of the grip frame 15.

The lifting means for the supporting brackets 18 are provided, for each bracket 18, by a fluid-operated actuator inserted in the lower part of the corresponding bar 16, of which the stem 60 is visible.

The correct translational motion of the bracket 18 is ensured by three rods 41, 41a and 41b and by the corresponding guide tubes 40, 40a and 40b, inside which the respective rods slide.

Each rod 41, 41a, 41b is fixed, at the upper end, to a bushing 65, 65a and 65b that acts as an end-of-travel abutment.

In a different embodiment of the invention, there are three actuators outside the bar, operating in the direction of the axis of the bar 16 to which they are fixed.

The ends of the rods 41, 41a, 41b and of the stem 60 of the actuator associated with the bar 16 are fixed to a plate-like body 42 the front part 43 of which forms the resting region for a pack of the bracket 18.

The plate-like body 42 comprises two distinct plates, a first plate 42a, above, and a second plate 42b, below.

The first upper plate 42a is fixed to the ends of the rods 41 etc. and to the end of the stem 60 of the actuator.

The second lower plate 42b is fixed to the first plate 42a by means of screws 42c that pass through corresponding slots 42d, which are formed in the first plate 42a and extend in the direction for gripping a pack.

In this way it is possible to manually adjust the width of the front part 43, i.e. of the resting region, based on the thickness of the pack that is to be carried.

The means of lifting the brackets 18 make it possible to finely adjust the height of the supporting brackets, so that the grip frame 15 can be adapted to the different heights that the various inclined deposit frames, or the raised work surfaces, can have.

The grip frame 15 comprises a horizontal bar 45, which supports additional glass grip suckers 46 and is arranged in proximity to the supporting beam 14, the additional suckers 46 being arranged so as to work on the same side as the first suckers 17.

The additional suckers 46 cooperate to improve the grip of glass plates that are particularly big and heavy, and at the same time, due to the peculiar position of the horizontal bar 45 that carries them, they do not interfere with the capacity of the vertical bars in a comb-like arrangement to deposit a low-emission glass plate on a suitable raised work surface or on a complementarily shaped inclined frame, also having a comb-like arrangement.

The frame 15 also comprises upper and lateral fall prevention means for locking a pack placed on the supporting brackets 18.

The upper fall prevention means for locking a pack are provided by two vertical plates 80, arranged symmetrically, one on the right hand side and one on the left hand side of the beam 14, naturally on the side on which the brackets 18 operate.

Each vertical plate 80 is supported by a corresponding actuator 81 for the vertical movement to be performed or to release the grip of the pack once it has been placed on the brackets 18.

Each actuator 81, which, as should be understood, can be fluid-operated, electric or mechanical or the like, is in turn supported by horizontal movement means, adapted to arrange the vertical plate 80 nearer to or further away from the bars 16 etc. of the frame, depending on the thickness of the pack that the frame 15 must support.

The horizontal movement means should be understood as being of a type known per se, such as endless screw devices or other similar actuators.

The horizontal movement means should be understood as possibly being manual adjustment systems, comprising an element fixed to the beam and a movable element supporting the actuator 81 and reversible means of fixing the established relative position.

The horizontal movement means, which as noted are known per se, are not illustrated for the sake of simplicity.

The lateral fall prevention and locking means are comprised of a series of eccentric elements, or cam-shaped elements, 85, pivoted on two opposite outer vertical bars 86, as in Figure 2.

The outer vertical bars 86 are parallel to the bars in a comb-like arrangement 16, and can also be provided with glass grip suckers 17.

The eccentric elements 85 are rotated by actuators of the known type, or manually, and by turning the part with the larger radius inward, the pack placed on the brackets is locked laterally as well.

These eccentric elements 85 are also understood to be supported by means for adjusting their distance from the frame 15, in such a way as to adjust their position depending on the thickness of the pack to be carried.

The outer vertical bars 86 are also designed to support laser or sonar devices, or other similar sensors, possibly mechanical, not shown for the sake of simplicity, for automatically detecting the position of the inclined frame or A-frame or other storage system or inclined work table to which the frame 15 must be approached in order to grip or deposit a plate of glass or a pack.

These devices or sensors for detecting the position of a destination frame are interconnected by means of an electronic unit for controlling the various means of movement with which the improved apparatus 10 according to the invention is provided, so as to arrange the frame 15 in the optimal position for gripping or release.

These devices or sensors for detecting the position are arranged on both sides of the frame 15, both on the plate gripping side and on the pack gripping side.

In practice it has been found that the invention thus described offers a solution to the drawbacks highlighted in the known types of apparatuses for moving individual or packed plate-like products.

In particular, with the present invention an apparatus is provided that is easily used in the most varied storage system layouts, thanks to its travel on rails, which are easy to set up.

Moreover, with the invention an improved apparatus is provided that is also capable of transporting individual plates of low-emission glass, thanks to the grip frame with vertical bars in a comb-like arrangement, which is able to grip a low-emission glass plate by one surface and place it on an inclined destination frame or surface by the same surface by which it is gripped.

What is more, with the invention an improved apparatus is provided in which the grip and transport frame is more mobile and versatile than in known apparatuses, in being able to grip, by way of the vertical translational means 13 and by way of the means for lifting the supporting brackets 18, plates and packs of plates from heights that vary and are mutually different.

Moreover, with the invention an apparatus is provided that makes it possible to automate the operations of loading and unloading the packs of plate-like products, and also the plate-like products themselves, thus eliminating any manual intervention and therefore intervention by staff, in particular for unloading packs of glass plates from means of transport, which currently are manually unloaded by staff in close and hazardous contact with the packs.

Therefore, with the invention an apparatus is provided that is safer than the apparatuses of the known type.

With the invention obviously an improved apparatus is provided that maintains a load capacity which is not less than that of the known apparatuses.

Moreover, with the present invention an improved apparatus for moving individual or packed plate-like products is provided, that can be easily combined with known and operating processing lines for plate-like products.

Last but not least, with the invention an improved apparatus for moving individual or packed plate-like products is provided, that can be produced using systems and technologies of the known type.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the dimensions, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An apparatus (10) for moving individual or packed plate-like products, particularly but not exclusively for storage systems with perpendicular translational motion, constituted by a carriage-mounted and motorized structure (11), which can perform a translational motion on rails (12), said carriage-mounted structure (11) being adapted to move, with the help of vertical translational means (13), a supporting beam (14) which is substantially perpendicular to the direction of translational motion of said carriage-mounted structure (11), said supporting beam (14) supporting, so that it is coupled rotatably about an axis which is parallel to the direction of extension of the beam (14), a grip frame (15), which is constituted by a series of vertical bars (16, 16a, 16b, 16c) arranged in a comb-like arrangement, **characterized in that** each vertical bar is provided with a plurality of suckers (17) for gripping plate-like products and is provided in a lower region with supporting brackets (18) for a pack of plate-like products, means for lifting and lowering with respect to the corresponding vertical bar (16) is associated with said brackets (18), said supporting brackets (18) are directed so as to operate on the opposite side of said suckers (17) with respect to the corresponding vertical bar (16).

2. The apparatus according to claim 1, **characterized in that** said carriage-mounted and motorized structure (11) comprises a carriage (19) which is provided with two mutually opposite series of wheels (20, 21) for gliding on said rails (12), said carriage (19) supporting centrally a turret (22) with a motorized center bearing (23) which has a vertical axis and to which said vertical translation means (13) are fixed.

3. The apparatus according to the preceding claims, **characterized in that** said vertical translational means (13) are constituted by four vertical guiding profiles (24), which are jointly connected to the rotating part of said center bearing (23) and form a guiding frame for a corresponding external cage (27), formed by corresponding posts (25) arranged so as to slide on said vertical profiles (24) by means of wheels (26), said posts (25) being fixed to said beam (14) and to each other by means of cross-members (30) and being moved with said beam (14) vertically by a fluid-operated actuator (28), which is interposed between said rotating part of said center bearing (23) and said external cage (27).

4. The apparatus according to the preceding claims, **characterized in that** said grip frame (15) is coupled rotatably to said supporting beam (14) by means of a tubular element (32), which is pivoted axially to said beam and from which said vertical bars (16, 16a, 16b, 16c) extend, said tubular element (32) being rotated by means of at least one lever (34) which is fixed at one end to the tubular element (32) and at the opposite end to the stem of an actuator (35), which operates with a substantially horizontal axis and the jacket of which is coupled to a nearby post (25) which is jointly connected to said beam (14).

5. The apparatus according to the preceding claims, **characterized in that** said lifting means for said supporting brackets (18) are constituted, for each bracket (18), by at least one fluid-operated actuator (40), which operates in the direction of the axis of the bar (16) to which it is fixed, the end of the stem (41) of said at least one actuator (40) being fixed to a plate-like body (42), the front part (43) of which forms the resting region for a pack of said bracket (18).

6. The apparatus according to claim 5, **characterized in that** said plate-like body (42) comprises two distinct plates, a first upper plate (42a) and a second lower plate (42b), the first plate (42a) being fixed to the ends of the rods (41, 41a, 41b) and to the end of the stem (60) of the actuator, the second lower plate (42b) being fixed to the first plate (42a) by means of screws (42c) that pass through corresponding slots (42d), which are formed in the first plate (42a) and extend in the direction for gripping a pack.

7. The apparatus according to the preceding claims, **characterized in that** said grip frame (15) comprises a horizontal bar (45), which supports additional glass grip suckers (46) and is arranged in proximity to the supporting beam (14), said additional suckers (46) being arranged so as to work on the same side as said first suckers (17).

8. The apparatus according to the preceding claims, **characterized in that** said frame (15) also comprises upper fall prevention means for locking a pack placed on said supporting brackets (18).

9. The apparatus according to claim 8, **characterized in that** said frame (15) also comprises lateral fall prevention means for locking a pack placed on said supporting brackets (18).

10. The apparatus according to the preceding claims, **characterized in that** said rails (12) are part of an overhead crane (50) which is arranged so as to move on second rails (51, 151), the lateral carriages (52, 152) that glide on the second rails (51, 151) and support the ends of the first rails (12, 112) being moved with rack and pinion devices (53, 153) and being provided with guiding and tipping prevention devices (54, 154).

## Patentansprüche

1. Vorrichtung (10) zum Bewegen einzelner oder gebündelter plattenartiger Produkte, insbesondere jedoch nicht ausschließlich für Lagersysteme mit senkrechter translatorischer Bewegung, die durch eine an einem Fahrgestell befestigte und motorisierte Struktur (11) gebildet wird, die eine translatorische Bewegung auf Schienen (12) durchführen kann, wobei die an einem Fahrgestell befestigte Struktur (11) eingerichtet ist, mit Hilfe von vertikalen Translationsmitteln (13) einen Stützträger (14) zu bewegen, der im Wesentlichen senkrecht zu der Richtung der translatorischen Bewegung der an dem Fahrgestell befestigten Struktur (11) verläuft, wobei der Stützträger (14) einen Halterahmen (15), der durch eine Mehrzahl von vertikalen Balken (16, 16a, 16b, 16c) gebildet wird, die in einer kammartigen Anordnung angeordnet sind, so stützt, dass er um eine Achse drehbar ist, die parallel zu der Ausdehnungsrichtung des Trägers (14) verläuft, **dadurch gekennzeichnet, dass** Jeder vertikale Balken mit einer Mehrzahl von Saugern (17) zum Halten plattenartiger Produkte und In einem unteren Bereich mit Stützklammern (18) für ein Bündel plattenartiger Produkte ausgestattet ist, wobei mit den Klammern (18) Mittel zum Anheben und Absenken relativ zu dem entsprechenden vertikalen Balken (16) verbunden sind, wobei die Stützklammern (18) so ausgerichtet sind, dass sie auf der den Saugern (17) gegenüberliegenden Seite relativ zu dem jeweiligen vertikalen Balken (16) arbeiten.

2. Vorrichtung nach Anspruch 1, **dadurch gekennzeichnet, dass** die mit dem Fahrwerk verbundene und motorisierte Struktur (11) ein Fahrgestell (19) aufweist, das mit zwei gegenseitig gegenüberliegenden Mehrzahlen von Rädern (20, 21) für das Entlanggleiten auf den Schienen (12) ausgestattet ist, wobei das Fahrgestell (19) zentral ein Drehgestell (22) mit einer motorisierten Zentrallagerung (23) stützt, die eine vertikale Achse aufweist und an der die vertikalen Translationsmittel (13) befestigt sind.

3. Vorrichtung nach dem vorstehenden Anspruch 1, **dadurch gekennzeichnet, dass** die vertikalen Translationsmittel (13) durch vier vertikale Führungsproflle (24) gebildet werden, die gemeinsam mit dem drehenden Anteil der Zentrallagerung (23) verbunden sind und einen Führungsrahmen für einen entsprechenden äußeren Käfig (27) bilden, der durch entsprechende Stützen (25) gebildet wird, die so angeordnet sind, dass sie auf den vertikalen Profilen (24) mit Hilfe von Rädern (26) entlanggleiten können, wobei die Stützen (25) an dem Träger (14) und an sich gegenseitig mittels Querträgern (30) befestigt sind und mit dem Träger (14) vertikal durch ein fluidbetriebenes Stellglied (28) bewegt werden, das zwischen dem drehenden Anteil der Zentrallagerung (23) und dem äußeren Käfig (27) angeordnet ist.

4. Vorrichtung nach den vorstehenden Ansprüchen, **dadurch gekennzeichnet, dass** der Halterahmen (15) drehbar mit dem Stützträger (14) durch ein rohrförmiges Element (32) gekoppelt ist, das axial an dem Träger drehbar gelagert Ist und von dem sich die vertikalen Balken (16, 16a, 16b, 16c) erstrecken, wobei das rohrförmige Element (32) durch wenigstens einen ersten Hebel (34) gedreht wird, der an einem Ende an dem rohrförmigen Element (32) und an dem gegenüberliegenden Ende an dem Schaft eines Stellgliedes (35) befestigt ist, das mit einer im wesentlichen horizontalen Achse wirkt und dessen Ummantelung an eine nahe Stütze (25) gekoppelt ist, die gemeinsam mit dem Träger (14) verbunden ist.

5. Vorrichtung nach den vorstehenden Ansprüchen, **dadurch gekennzeichnet, dass** die Hebemittel für die Stützklammern (18) für jede Klammer (18) durch wenigstens ein fluidbetriebenes Stellglied (40) gebildet werden, das in Richtung der Achse des Balkens (16), an dem es befestigt ist, wirkt, wobei das Ende des Schaftes (41) des wenigstens einen Stellgliedes (40) an einem plattenartigen Körper (42) befestigt ist, dessen vorderer Anteil (43) den Haltebereich für ein Bündel der Klammern (18) bildet.

6. Vorrichtung nach Anspruch 5, **dadurch gekennzeichnet, dass** der plattenartige Körper (42) zwei separate Platten, nämlich eine erste obere Platte (42a) und eine zweite untere Platte (42b) aufweist, wobei die erste Platte (42a) an den Enden der Stangen (41, 41a, 41b) und an dem Ende des Schaftes (60) des Stellgliedes befestigt ist, wobei die zweite untere Platte (42b) an der ersten Platte (42a) durch Schrauben (42c) befestigt Ist, die durch entsprechende Schlitze (42d) verlaufen, die in der ersten Platte (42a) gebildet sind und sich in einer Richtung zum Halten eines Bündels erstrecken.

7. Vorrichtung nach den vorstehenden Ansprüchen, **dadurch gekennzeichnet, dass** der Halterahmen (15) einen horizontalen Balken (45) aufweist, der zusätzliche Glashaltesauger (46) stützt und In der Nähe des Stützträgers (14) angeordnet ist, wobei die zusätzlichen Sauger (46) so angeordnet sind, dass sie auf der gleichen Seite wie die ersten Sauger (17) arbeiten.

8. Vorrichtung nach den vorstehenden Ansprüchen, **dadurch gekennzeichnet, dass** der Rahmen (15) obere Fallverhinderungsmittel zum Verriegeln eines Bündels aufweist, das auf den Stützklammern (18) platziert wurde.

9. Vorrichtung nach Anspruch 8, **dadurch gekennzeichnet, dass** der Rahmen (15) auch seltliche Fallverhinderungsmittel zum Verriegeln eines Bündels, das auf den Stützklammern (18) platziert wird, aufweist.

10. Vorrichtung nach den vorstehenden Ansprüchen, **dadurch gekennzeichnet, dass** die Schienen (12) Teil eines Deckenlaufkrans (50) sind, der angepasst Ist, um sich auf zweiten Schlenen (51, 151) zu bewegen, wobei die lateralen Fahrgestelle (52, 152), die auf den zweiten Schienen (51, 151) entlanggleiten und die Enden der ersten Schienen (12, 112) stützen, mit Zahnstangenvorrichtungen (53, 153) bewegt werden und mit Führungs- und Kippverhinderungseinrichtungen (54, 154) ausgerüstet sind.

## Revendications

1. Un appareil (10) pour déplacer des produits de type plaque individuellement ou en paquets, particulièrement, mais pas exclusivement, pour des systèmes de stockage présentant un mouvement perpendiculaire de translation, constitué d'une structure (11) montée sur un chariot et motorisée, pouvant effectuer un mouvement de translation sur des rails (12), ladite structure (11) montée sur un chariot étant adaptée pour déplacer, à l'aide de moyens (13) verticaux de translation, une poutre (14) de support qui est substantiellement perpendiculaire à la direction du mouvement de translation de ladite structure (11) montée sur un chariot, ladite poutre de support (14) supportant, de façon à ce qu'il soit couplé en rotation autour d'un axe parallèle à la direction d'extension de la poutre (14), un cadre de préhension (15) constitué d'une série de barres verticales (16, 16a, 16b, 16c) arrangées en épis, **caractérisé en ce que** chaque barre verticale est dotée d'une pluralité de ventouses (17) pour agripper des produits de type plaque et est dotée, dans une partie inférieure, de crochets de support (18) pour un paquet de produits de type plaque, des moyens pour soulever et baisser par rapport à la barre verticale (16) correspondante sont associés auxdits crochets (18), lesdits crochets (18) de support sont dirigés de façon à entrer en action sur le côté opposé desdites ventouses (17) par rapport à la barre verticale (16) correspondante.

2. L'appareil selon la revendication 1, **caractérisé en ce que** ladite structure (11) montée sur un chariot et motorisée comprend un chariot (19) lequel est doté de deux séries de roues (20, 21) opposées mutuellement pour coulisser sur les rails (12) cités, ledit chariot (19) supportant en son centre une tourelle (22) ayant un palier central (23) motorisé qui présente un axe vertical et auquel sont fixés lesdits moyens (13) de translation verticale.

3. L'appareil selon les revendications précédentes, **caractérisé en ce que** lesdits moyens (13) de translation verticale sont constitués de quatre profilés de guidage (24) verticaux, qui sont connectés conjointement avec la partie rotative dudit palier central (23) et forment un cadre de guidage pour une cage externe (27) correspondante, formée par des montants (25) correspondants arrangés de manière à coulisser le long desdits profilés verticaux (24) au moyen de roues (26), lesquels montants (25) étant fixés à ladite poutre (14) et les uns aux autres grâce à des traverses (30) et étant déplacés avec ladite poutre (14) verticalement par un actionneur (28) à fluide, qui est interposé entre ladite partie rotative dudit palier central (23) et ladite cage externe (27).

4. L'appareil selon les revendications précédentes, **caractérisé en ce que** ledit cadre de préhension (15) est couplé en rotation avec ladite poutre de support (14) au moyen d'un élément tubulaire (32), qui est monté à pivotement axial sur ladite poutre et duquel s'étendent lesdites barres verticales (16, 16a, 16b, 16c), ledit élément tubulaire (32) étant sollicité en rotation au moyen d'au moins un levier (34) qui est fixé selon une extrémité à l'élément tubulaire (32) et selon l'extrémité opposée à la tige d'un actionneur (35) qui opère selon un axe substantiellement horizontal et dont l'enveloppe est reliée à un montant (25) proche, lequel est connecté à ladite poutre (14).

5. L'appareil selon les revendications précédentes, **caractérisé en ce que** lesdits moyens de levage pour lesdits crochets de support (18) sont constitués, pour chaque crochet (18), par au moins un actionneur (40) à fluide, qui opère dans la direction de l'axe de la barre (16) à laquelle il est fixé, l'extrémité de la tige (41) dudit au moins un actionneur (40) étant fixée à un corps de type plaque (42), dont la partie frontale (43) forme la zone de réception où se trouve un paquet desdits crochets (18).

6. L'appareil selon la revendication 5, **caractérisé en ce que** ledit corps de type plaque (42) comprend deux plaques distinctes, une première plaque supérieure (42a) et une seconde plaque inférieure (42b), la première plaque (42a) étant fixée aux extrémités des baguettes (41, 41a, 41b) et à l'extrémité de la tige (60) de l'actionneur, la seconde plaque inférieure (42b) étant fixée à la première plaque (42a) au moyen de vis (42c) qui passent à travers des fentes (42d) correspondantes qui sont formées dans la première plaque (42a) et qui s'étendent dans la direction de préhension d'un paquet.

7. L'appareil selon les revendications précédentes, **caractérisé en ce que** ledit cadre de préhension (15) comprend une barre horizontale (45) qui supporte des ventouses additionnelles (46) de préhension de verre et qui est disposée à proximité de la poutre de support (14), lesdites ventouses additionnelles (46) étant agencées de façon à agir du même côté que lesdites premières ventouses (17).

8. L'appareil selon les revendications précédentes, **caractérisé en ce que** ledit cadre (15) comporte également des moyens supérieurs de prévention de chute pour verrouiller un paquet placé sur lesdits crochets de support (18).

9. L'appareil selon la revendication 8, **caractérisé en ce que** ledit cadre (15) comprend aussi des moyens de prévention de chute latérale pour verrouiller un paquet placé sur lesdits crochets de support (18).

10. L'appareil selon les revendications précédentes, **caractérisé en ce que** lesdits rails (12) font partie d'une grue à voie surélevée (50) qui est agencée de façon à se déplacer sur des seconds rails (51, 151), les chariots latéraux (52, 152) qui coulissent sur les seconds rails (51, 151) et supportent les extrémités des premiers rails (12, 112) étant manoeuvrés par des dispositifs (53, 153) à crémaillères et pignons et étant dotés de dispositifs (54, 154) assurant le guidage et empêchant le basculement.
